# EUROPEAN PATENT APPLICATION

(11) **EP 4 763 386 A1**
(43) Date of publication of application: **24.06.2026**
(21) Application number: 24221990.5
(22) Date of filing: 20.12.2024
(51) Int. Cl.: B23B 27/10, B23B 27/16, B23B 27/22

(54) **CHIP BREAKER BODY AND CUTTING TOOL**

(71) Applicant: Ceratizit Luxembourg Sàrl, 8232 Mamer (LU)
(72) Inventor: ARJONA, Sylvain, 8232 Mamer (LU)
(74) Representative: Ciesla, Dirk

(57) **Abstract**

A chip breaker body (1, 100, 110, 120, 130) for a cutting tool (3, 300, 310, 320) comprising: a bottom surface (4), a top surface (5), a back surface (6) and a slanted front surface (7), wherein the back surface (6) and the slanted front surface (7) are arranged opposite to each other and are each joined to the bottom surface (4) and top surface (5), wherein the slanted front surface (7) has at least one elongated recess (8), wherein the bottom surface (4) has a groove structure (9) intersecting the elongated recess (8), creating a front groove opening edge (12) within the elongated recess (8), wherein, if the slanted front surface (7) forms one or more rail-like ridges (70), the elongated recess (8) depresses the slanted-front surface (7) independently of the presence of such rail-like ridges (70).

## Description

The present invention relates to a chip breaker body and to a cutting tool comprising a chip breaker body and a cutting insert.

DE 10 2009 014 971 B2 discloses a cutting tool comprising a tool holder, a cutting insert, and a chip breaker body, which is designed as a component separate from the cutting insert. The cutting insert is arranged in a cutting insert recess of the tool holder, positioned between the chip breaker body and the tool holder, and is fastened to the tool holder by means of a cutting insert fastening means. The chip breaker body is designed as a chip cover that covers the cutting insert. Additional coolant channels are provided directly in the chip breaker body, which further promote chip formation and enhance the resulting surface quality of the workpiece. By integrating the coolant channels directly into the chip breaker body, the coolant can be brought closer to the cutting edges.

The chip breaker body and the associated cutting tool described in DE 10 2009 014 971 B2 present a disadvantage concerning chip flow along the slanted front surface of the chip breaker body. Specifically, the design of the coolant channels tends to cause chip grating, which increases the likelihood of these channels becoming clogged with grated debris; chip grating refers to the reduction of chips into smaller pieces by frictional contact with a surface and/or its edge or edges. This issue is mostly met when the chips produced are wider than the openings of the coolant channels, leading to frequent blockages and potential disruptions in the cooling process.

The objective technical problem of the present invention is to provide a chip breaker body and a cutting tool comprising a chip breaker body and a cutting insert, designed to enhance both chip flow and coolant flow during chip formation.

The objective technical problem is solved by the subject matter of claim 1 with preferred embodiments defined in the dependent claims, which can be freely combined with each other.

According to the present invention a chip breaker body for a cutting tool comprises a bottom surface, a top surface, a back surface and a slanted front surface, wherein the back surface and the slanted front surface are arranged opposite to each other and are each joined to the bottom surface and top surface, wherein the slanted front surface has at least one elongated recess, wherein the bottom surface has a groove structure intersecting the elongated recess, creating a front groove opening edge within the elongated recess, wherein, if the slanted front surface forms one or more rail-like ridges, the elongated recess depresses the slanted-front surface independently of the presence of one or more such rail-like ridges.

The slanted front surface is designed to break and/or control machined chips during a cutting operation with a cutting insert placed underneath the bottom surface of the chip breaker body. The slanted front surface interrupts the flow of chips from the cutting edge and/or rake surface of the cutting insert, causing typically these chips to break into smaller, more manageable pieces, or to curl the chips rather them breaking them. The cutting tool is typically a turning tool, a milling tool, a drilling tool, a grooving tool or a parting tool and especially a threading tool to generate a thread into a workpiece under a relative rotation with respect to the workpiece.

The groove structure of the bottom surface allows for coolant flow towards and out of the slanted front surface and forms a closed channel structure together with a top surface of a cutting insert under a corresponding mutual contact. The groove structure comprises typically one or more individual grooves leading towards the slanted front surface, such that at least one of these individual grooves intersects the slanted front surface. Some or all of these individual grooves may intersect the back surface and/or may extend from a chamber-like groove being an optional part of the groove structure.

In that, if the slanted front surface forms one or more rail-like ridges, the elongated recess depresses the slanted-front surface independently of the presence of one or more of such rail-like ridges, i.e. if one of more such rail-like ridges are present the elongated recess can be formed at the root or the crest associated with such rail-like ridges. Thus, the elongated recess forms in any case a distinct depression in the slanted front surface. The rail-like ridges are optional, and if present are designed to partake in chip deformation. The chip breaker body has a profiled front surface in the presence of at least one of these rail-like ridges. The slanted front surface can also be completely void of rail-like ridges such that the elongated recess and further such elongated recesses are then the only depressions in the slanted front surface.

The slanted front surface may progress in a stepwise manner sidewise between the top surface and the bottom surface, thereby retreating successively towards the back surface.

In that the groove structure intersects the elongated recess, it forms the front groove opening edge completely or at least partly within the elongated recess, thereby surrounding the front groove opening edge. The elongated recess functions as a bevel, breaking the previously formed front groove opening edge created by the intersection of the groove structure with the slanted front surface and pushing the front groove opening deeper into the chip breaker body towards the back surface. This design allows chips wider than the width of the front groove opening edge to flow smoothly along and over the slanted front surface without being grated by the front groove opening edge, which significantly reduces the risk of the groove structure becoming jammed by grated chip debris.

In that the slanted front surface has at least one such elongated recess, it can have two or more such elongated recesses spaced apart, wherein the groove structure intersects each of these further elongated recesses, creating further front groove opening edges within each of these further elongated recesses, wherein if the slanted front surface forms one or more rail-like ridges, the further elongated recesses depress each the slanted-front surface independently of the presence of one or more such rail-like ridges at the associated roots and/or crests, i.e. one elongated recess can be formed at the root and the other elongated recess can be formed at the crest or the elongated recesses can be formed at the roots only or at the crests only.

The chip breaker body comprises two side surfaces arranged opposite of each other, and which are each joined to the slanted front surface, the back surface, the bottom surface and the top surface.

According to a preferred embodiment of the chip breaker body the elongated recess has a depth-to-width ratio in the range from 0.3 to 2. This ensures an optimal balance between structural integrity and chip flow efficiency, allowing for effective chip deformation while maintaining the strength and durability of the chip breaker body. The depth is measured perpendicularly to the direction of the elongated extension along which the elongated recess is elongated. The width is measured bottommost and across opposing sides of the elongated recess

According to a preferred embodiment of the chip breaker body a bottommost width of the elongated recess is not more than 1.5 times as large as a bottommost width of the front groove opening edge. This means the elongated recess is relatively narrow compared to the front groove opening edge, ensuring a specific proportion of the slanted front surface outside of the elongated recess that contributes to the effectiveness of the chip breaker body. This design detail helps in maintaining the structural integrity and functionality of the chip breaker body.

According to a preferred embodiment of the chip breaker body, the slanted front surface extends under a slanted front surface angle α with respect to the bottom surface in a cross-section plane arranged within the elongated recess and oriented parallel along its elongated extension, wherein the elongated recess extends under a bevel-like angle β with respect to the bottom surface in said cross-section plane, wherein β - α = γ, wherein γ ranges from 90° to -α, i.e. γ ranges from 90° to the negative value of α. The angle α is to be measured in said cross-section plane where the slanted front surface intersects the bottom surface, such that one leg of the angle α coincides with the bottom surface in said cross-section plane and such that the other leg of the angle α coincides simultaneously with the slanted front surface in said cross-section plane. The angle β is to be measured in said cross-section plane where the elongated recess is joined to the front groove opening edge such that one leg of the angle β coincides with the edge formed by the elongated recess in said cross-section plane and joined to the front groove opening edge and such that the other leg of the angle β coincides simultaneously with the bottom surface in said cross-section plane.

When γ = 0°, the slanted front surface and the elongated recess are arranged parallel in said cross-section plane. The subtraction of α from β, i.e. β - α, which yields γ in the range from 90° to -α helps to reduce chip grating such that the chip breaker body is optimized to enhance performance by minimizing chip grating. By having this specific range from 90° to -α, the chip breaker body can more effectively manage and break the chips, leading to smoother operation and less wear on the cutting tool.

According to a preferred embodiment of the chip breaker body γ ranges from 60° to 0°, which causes an optimized bevel-like effect of the elongated recess.

According to a preferred embodiment of the chip breaker body α ranges from 25° to 75°, preferably α ranges from 35° to 60°. When α lies in these range, chip flow along the slanted front surface is improved.

According to a preferred embodiment of the chip breaker body the elongated recess does not intersect the top surface. In this embodiment chips can flow over and above the front groove opening edge by which chip grating is reduced to the elongated recess and at the same time a part of the slanted front surface is provided behind the end of the elongated recess for chip conduction.

According to a preferred embodiment of the chip breaker body the width of the elongated recess decreases along the elongated extension of the elongated recess in the direction away from the front groove opening edge. This design helps in reducing the chances of chip-clogging and ensures smoother chip evacuation, which is crucial for maintaining the efficiency of the machining process.

According to a preferred embodiment of the chip breaker body it is made from a sintered cemented carbide. The sintered cemented carbide is typically made from a skeleton network of metal carbide particles, such as tungsten carbide particles, sintered together, wherein the spaces of the skeleton network are filled with a metallic binder, being more ductile than the metal carbide particle, and typically comprising cobalt as the major constituent, forming thereby more than 50 weight percent with respect to the metallic binder composition. The sintered cemented carbide offers a good balance of strength and toughness, which is crucial for maintaining the integrity of the chip breaker body under the stresses of machining.

According to a preferred embodiment of the chip breaker body the slanted front surface is completely planar outside of the elongated recess and outside of possible further elongated recesses having the features according to at least one the dependent claims. Specifically, there are no rail-like ridges or raised features that could disrupt the flatness of the surface. This design ensures that the slanted front surface remains completely planar, apart from the elongated recess and optional further elongated recesses, which helps in maintaining consistent performance and reducing wear during machining.

According to a preferred embodiment of the chip breaker body the top surface is completely planar. The top surface is entirely flat and smooth, without any curves, indentations, or raised features. The planar surface is simpler to manufacture and maintain. It reduces the complexity of the design, making it easier to produce and ensuring that the tool remains effective over time.

The objective technical problem is also solved by the subject matter of claim 12 with preferred embodiments defined in the dependent claims, which can be freely combined with each other.

According to the present invention a cutting tool comprises a chip breaker body according any one of claims 1 to 11 and a cutting insert, wherein the chip breaker body is positioned onto the cutting insert on parts of a rake surface face of the cutting insert for chip guiding along the slanted front surface. The cutting tool is the overall tool used for machining, which includes both the chip breaker body and the cutting insert but may also comprise further optional components such as a tool body to which the cutting insert is mounted and a shim seat supporting a bottom surface of the cutting insert The chip breaker body is designed according to the specifications mentioned in the preceding claims, including thereby the elongated recess and slanted front surface. The cutting insert is the part of the cutting tool that actually cuts the material of a workpiece. It has a rake surface face, which is the surface over which the chips flow and which then come into contact with the slanted front surface of the chip breaker body. The chip breaker body is securely attached to the cutting insert. This ensures that the chip breaker body stays in place during machining. The slanted front surface of the chip breaker helps direct the chips away from the cutting area, preventing them from interfering with the cutting process. By guiding the chips effectively, the chip breaker body helps in maintaining a smooth cutting process. The cutting insert is typically made from a sintered cemented carbide which is typically made from a skeleton network of metal carbide particles, such a tungsten carbide particles, sintered together, wherein the spaces of the skeleton network are fille with a metallic binder, being more ductile than the metal carbide particle, and typically comprising cobalt as the major constituent, forming thereby more than 50 weight percent with respect to the metallic binder composition. The sintered cemented carbide offers a good balance of strength and toughness, which is crucial for maintaining the integrity of the chip breaker body under the stresses of machining. The sintered cemented carbide the cutting insert may be made of can be different from the sintered cemented carbide the chip breaker body may be made of to meet the different mechanical and thermal conditions present at the cutting insert and the chip breaker body during machining.

According to a preferred embodiment of the cutting tool the cutting insert comprises at least one thread cutting tooth, for example only one thread cutting tooth, though it is possible to have more than one thread cutting tooth, such as two, three, four, five, six, seven and so on. The thread cutting tooth is designed to cut threads into the material being machined. Threads are the helical grooves found for example on the inside or outside of a pipe. The presence of a thread cutting tooth allows the cutting tool to create precise and accurate threads, which are essential for the proper fitting of threaded components, such as said pipes, especially pipes designed for use in oil and/or gas related applications.

Further advantages and practicalities of the present invention will become apparent from the following description of different embodiments of a chip breaker body and a cutting tool with reference to the accompanying figures.

### The Figures show

- Fig. 1a:: a perspective depiction of a chip breaker body according to a first embodiment placed onto a thread cutting insert thereby forming in combination a first embodiment of a cutting tool;
- Fig. 1b:: a depiction of a detail of the chip breaker body in a viewing direction perpendicular to the slanted front surface according to the first embodiment;
- Fig. 1c:: a cross-sectional depiction of the chip breaker body according to the first embodiment and the cutting tool according to the first embodiment;
- Fig. 1d:: a cross-sectional depiction of detail of the chip breaker body according to the first embodiment;
- Fig. 2a:: a perspective depiction of a chip breaker body according to a second embodiment placed onto a thread cutting insert thereby forming in combination a second embodiment of a cutting tool;
- Fig. 2b:: a cross-sectional depiction of a detail of the chip breaker body according to the second embodiment;
- Fig. 3a:: a perspective depiction of a chip breaker body according to a third embodiment placed onto a thread cutting insert thereby forming in combination a third embodiment of a cutting tool;
- Fig. 3b:: a cross-sectional depiction of a detail of the chip breaker body according to the third embodiment;

- Fig. 4a:: a perspective depiction of a chip breaker body according to a fourth embodiment placed onto a thread cutting insert thereby forming in combination a fourth embodiment of a cutting tool;
- Fig. 4b:: a cross-sectional depiction of a detail of the chip breaker body according to the fourth embodiment;
- Fig. 5:: a perspective depiction of a detail of a chip breaker body according to a fifth embodiment.

### First Embodiments

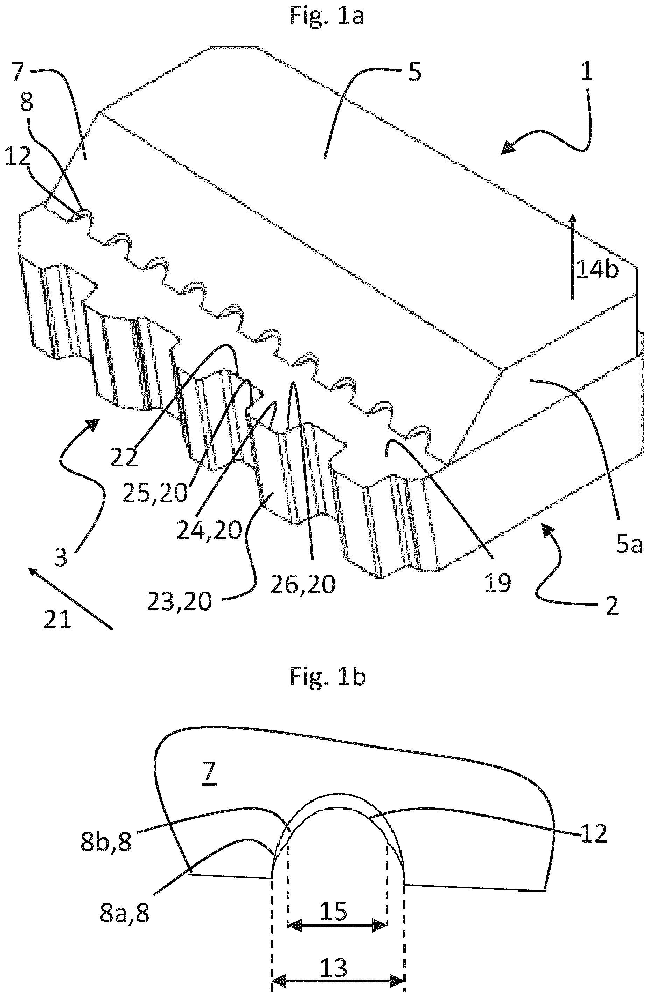

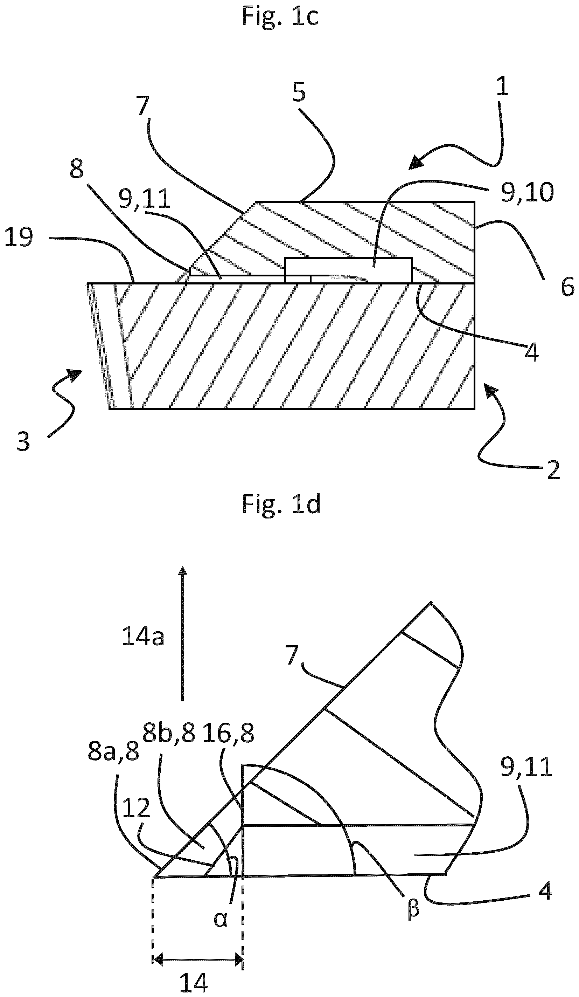

Fig. 1a shows a perspective depiction of a chip breaker body 1 according to a first embodiment positioned onto a thread cutting insert 2 by which a cutting tool 3 according to a first embodiment is formed. Fig. 1b shows a detail of the chip breaker body 1 in a viewing direction perpendicular to a slanted front surface 7 of the chip breaker body 1. Fig. 1c shows a cross-sectional depiction of the chip breaker body 1. Fig. 1d shows a depiction of a detail of the chip breaker body 1 in the same cross-sectional depiction as shown in Fig. 1c.

Reference is now made to Figs. 1a to 1d to describe the chip breaker body 1 and the cutting tool 3 according to their first embodiments in further detail. The chip breaker body 1 comprises a bottom surface 4, a top surface 5, a back surface 6 and the slanted front surface 7 and is made exemplarily from a sintered cemented carbide. The back surface 6 and the slanted front surface 7 are arranged opposite to each other and are each joined to the bottom surface 4 and top surface 5. The slanted front surface 7 exemplarily has ten elongated recesses 8 but could also have only one elongated recess 8 or more. The bottom surface 4 has a groove structure 9 comprising a chamber-groove 10 from which ten individual channel-grooves 11 extend. Each of the channel-grooves 11 and thereby the groove structure 9 intersects each of the elongated recesses 8, creating a front groove opening edge 12 within each elongated recess 8, as can be seen for example in Fig. 1b which depicts a detail of the slanted front surface 7 where the groove structure 9 intersects one of the elongated recesses 8. As can be noted in Fig. 1b the elongated recess 8 has an outer edge 8a within which the front groove opening edge 12 is completely contained and with respect to which it is completely lowered such that chips flowing along the slanted front surface 7 and over the groove opening edge 12 do typically not contact the groove opening edge 12 but instead contact at most a base surface 8b of the elongated recess 8 joined to the outer edge 8a and the front groove opening edge 12. The depiction of the elongated recess 8 and the front groove opening edge 12 in Fig 1b stand prototypically for the basic shape of the feature "elongated recess" and "front groove opening edge" of the present disclosure. The elongated recess 8 may be varied with respect to its depth and length proportions with respect to the front groove opening edge 12, as long as the front groove opening edge 12 is contained completely within the elongated recess 8; however, it is likewise possible, that the front groove opening edge 12 is contained at least partly in the elongated recess 8. It is further expressively stated that Fig. 1b assists the person skilled in the art to visualize especially the features "elongated recess" and "front groove opening edge" in themselves and in their relation to the slanted front surface 7.

If the slanted front surface forms one or more rail-like ridges, the elongated recesses 8 depresses the slanted-front surface 7 independently of the presence of one or more such rail-likes ridges at a root or crest associated with such rail-like ridges.

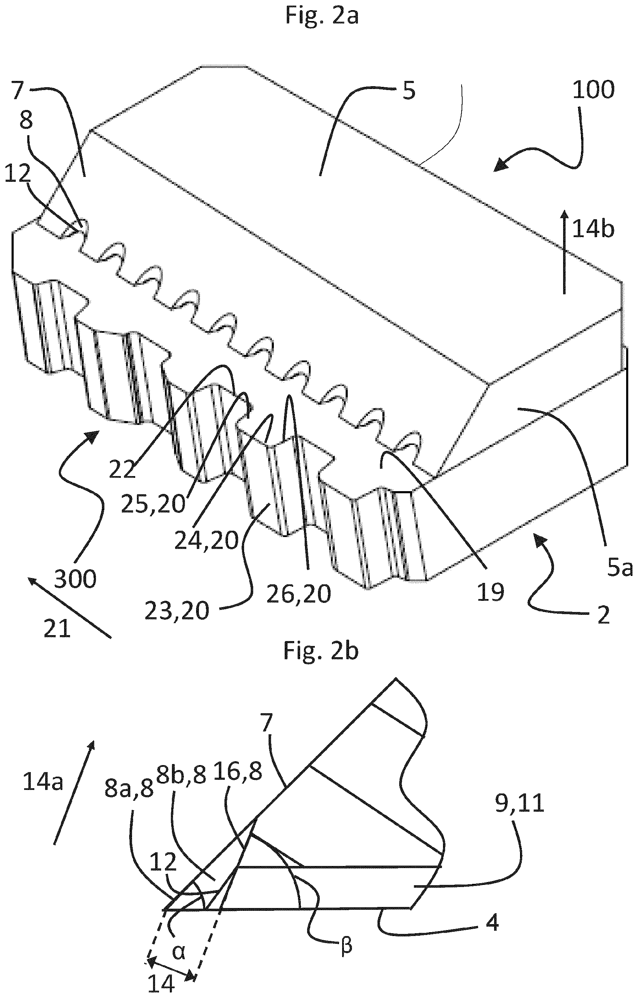

The chip breaker body 1 comprises further two side surfaces 5a, of which one is visible in Fig. 2a, and other side surface 5a is arranged opposite to the visible side surface 5a. The side surfaces 5a are each joined to the slanted front surface 7, the back surface 6, the top surface 5 and the bottom surface 4.

Each elongated recess 8 has a depth-to-width ratio, i.e. the depth divided by the width, in the range from 0.3 to 2, exemplarily in the first embodiment of the chip breaker body 1 of 0.5; a depth-to-width ratio for the elongated recess 8 of 0.5 corresponds to a semi-circular shape of the elongated recess 8 when viewed along the elongated extension of the elongated recess 8. Fig 1b shows how a corresponding width of each elongated recess 8 is to be measured by measuring a width 13 of the elongated recess 8 where the slanted front surface 7 is joined to the bottom surface 4, i.e. at the very bottom of the slanted front surface 7. Fig. 1d shows how a corresponding depth of each elongated recess 8 is to be measured by measuring a depth 14 perpendicularly to a direction 14a of the elongated extension 8 along which the elongated recess 8 is elongated; the direction 14a is in the embodiment of the chip breaker body 1 according to Figs. 1a to 1d perpendicular to the top surface 5, i.e. parallel to a surface normal vector 14b of the top surface 5b, which is depicted in Fig. 1a.

The width 13 is a bottommost width of each elongated recess 8, as depicted in Fig. 1b. The width 13 of each elongated recess is not more than 1.5 times as large as a bottommost width 15 of the front groove opening edge 12, exemplarily 1.3 as large. The width 15 is measured analogously to the width 13.

The cross-sectional depiction in Fig. 1d, which depicts a cross-section plane coinciding with the drawing plane of Fig. 1d, is arranged within the elongated recess 8 and oriented through and along the elongated extension of the elongated recess 8. The elongated recess 8 extends under a bevel-like angle β = 90°, exemplarily, with respect to the bottom surface 4. As depicted in Fig. 1d, the angle β is to be measured in the cross-section plane depicted by Fig. 1d where the elongated recess 8 is joined to the front groove opening edge 12 such that one leg of the angle β coincides with an edge 16 formed by the elongated recess 8 in said cross-section plane and joined to the front groove opening edge 12 and such that the other leg of the angle β coincides simultaneously with the bottom surface 4 in said cross-section plane.

The slanted front surface 7 extends in the cross-section plane depicted by Fig. 1d under an angle α = 45°, exemplarily, with respect to the bottom surface. As depicted in Fig. 1d, the angle α is to be measured in said cross-section plane depicted by Fig. 1d where the slanted front surface 7 intersects the bottom surface 4, such that one leg of the angle α coincides with the bottom surface 4 in said cross-section plane and such that the other leg of the angle α coincides simultaneously with the slanted front surface 7 in said cross-section plane. Thus, β - α = 45° for the chip breaker body 1, which lies in the range from 90° to -45°.

As can be seen in Figs. 1a and 1b, the width of each elongated recess 8 decreases along their elongated extension in the direction away from the front groove opening edge 12, in other words, each elongated recess 8 is U-shaped having the arc of the "U" arranged on parts of the back surface 6.

The slanted front surface 7 is exemplarily completely planar outside of the elongated recesses 8. The top surface 5 is exemplarily completely planar. It can further be seen in Fig. 1a that the elongated recesses 8 do not intersect the top surface 5.

The cutting tool 3 comprises the chip breaker body 1 and the thread cutting insert 2 exemplifying a cutting insert in the meaning of the present disclosure. The chip breaker body 1 is positioned onto the thread cutting insert 2 on parts of a rake surface 19 of the thread cutting insert 2 for chip guiding along the slanted front surface 7. The thread cutting insert 2 comprises exemplarily five cutting teeth 20 whose size increases from left to right with respect to Fig. 1a, i.e. opposite to the direction of the arrow 21 in Fig. 1a; the arrow 21 indicates the axial feed direction of the thread cutting insert 2. The cutting teeth 20 are thus designed for successively cutting into a workpiece to cut a helical thread. The cutting teeth 20 are separated from each other each time by a base section cutting edge 22 of the thread cutting insert 2. Each cutting tooth 20 has a clearance surface 23, a part of the rake surface 19, a top cutting edge 24, a leading cutting edge 25 and a trailing cutting edge 26, wherein "leading" and "trailing" refers to the axial feed direction, i.e. the arrow 21.

During thread cutting with the cutting tool 3 the thread cutting insert 2 cuts into a workpiece under a relative rotation and relative axial motion along the arrow 21 such that the correspondingly machined chips flow at least partly along the rake surface 19 until their flow is obstructed by the slanted front surface 7 by which the chips are being plastically deformed to enhance spiral coiling and/or breaking into smaller chips. During thread cutting with the thread cutting insert 2 coolant is typically ejected through the channel-grooves 9 and out of each elongated recesses 8 via the front groove opening edges 12 such that the coolant reaches the cutting edges 22, 24, 25 and 26 at least partly along the rake surface 19 by which chip formation is enhanced and the surface quality of the workpiece improved. Since the front groove opening edges 12 are formed within the elongated recesses 8, chip grating of the chips during their flow along the slanted front surface 7 is at least significantly reduced if not eliminated at all by which clogging of the channel-grooves 11 by otherwise grated chip debris is significantly if not at all reduced allowing for a better unobstructed coolant exit and coolant supply with respect to the channel-grooves 11 and thereby the groove structure 9. The elongated recesses 8 serve thus as bevels with respect to the channel-grooves 11 where they intersect the slanted front surface 7.

### Second Embodiments

Figs. 2a and 2b show a chip breaker body 100 according to a second embodiment and a cutting tool 300 according to a second embodiment, Fig. 2a is a perspective depiction similar to Fig. 1a and Fig. 2b a depiction similar to Fig. 1d. To the extent that the features have a similar function and arrangement as in the first embodiment of the chip breaker body 1 and first embodiment of the cutting tool 3 the same reference numerals are used in Figs. 2a and 2b.

The chip breaker body 100 differs from the breaker body 1 only regarding the design of the elongated recesses 8 which are longer but still do not intersect the top surface 5. The slanted front surface 7 of the breaker body 100 extends under the same angle α = 45° as for the chip breaker body 1 but the elongated recesses 8 extend under a smaller bevel-like angle β = 70°, such that β - α = 25°, which lies in the range from 90° to -45°.

This allows for an even smoother flow of chips along the slanted front surface 7 and over the front groove opening edge 12. The depth-to-width ratio of the elongated recesses 8 of the breaker body 100 is the same as for the elongated recesses 8 of the chip breaker body 1. The direction 14a depicted in Fig. 2b is obliquely oriented with respect the surface normal vector 14b of the top surface 5 depicted in Fig. 2a.

The cutting tool 300 differs from the cutting tool 3 only regarding the chip breaker body 100, i.e. the cutting insert 2 is the same.

### Third Embodiments

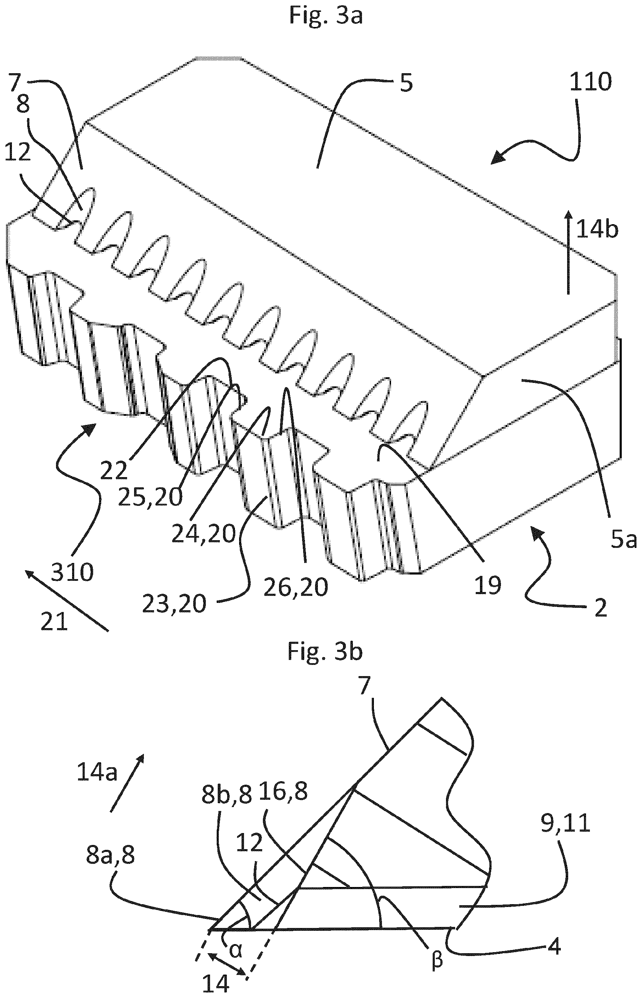

Figs. 3a and 3b show a chip breaker body 110 according to a third embodiment and a cutting tool 310 according to a third embodiment, Fig. 3a is a perspective depiction similar to Fig. 2a and Fig. 3b a depiction similar to Fig. 2b. To the extent that the features have a similar function and arrangement as in the first embodiment of the chip breaker body 1 and first embodiment of the cutting tool 3 the same reference numerals are used in Figs. 3a and 3b.

The chip breaker body 110 differs from the breaker body 100 only regarding the design of the elongated recesses 8 which are longer but still do not intersect the top surface 5. The slanted front surface 7 of the breaker body 110 extends under the same angle α = 45° as for the chip breaker body 1 but the elongated recesses 8 extend under a smaller bevel-like angle β = 60°, such that β - α = 15°, which lies in the range from 90° to -45°.

This allows for an even smoother flow of chips along the slanted front surface 7 and over the front groove opening edge 12. The depth-to-width ratio of the elongated recesses 8 of the breaker body 110 is the same as for the elongated recesses 8 of the chip breaker body 1. The direction 14a depicted in Fig. 3b is obliquely oriented with respect the surface normal vector 14b of the top surface 5 depicted in Fig. 3a.

The cutting tool 310 differs from the cutting tool 1 only regarding the chip breaker body 110, i.e. the cutting insert 2 is the same.

### Fourth Embodiments

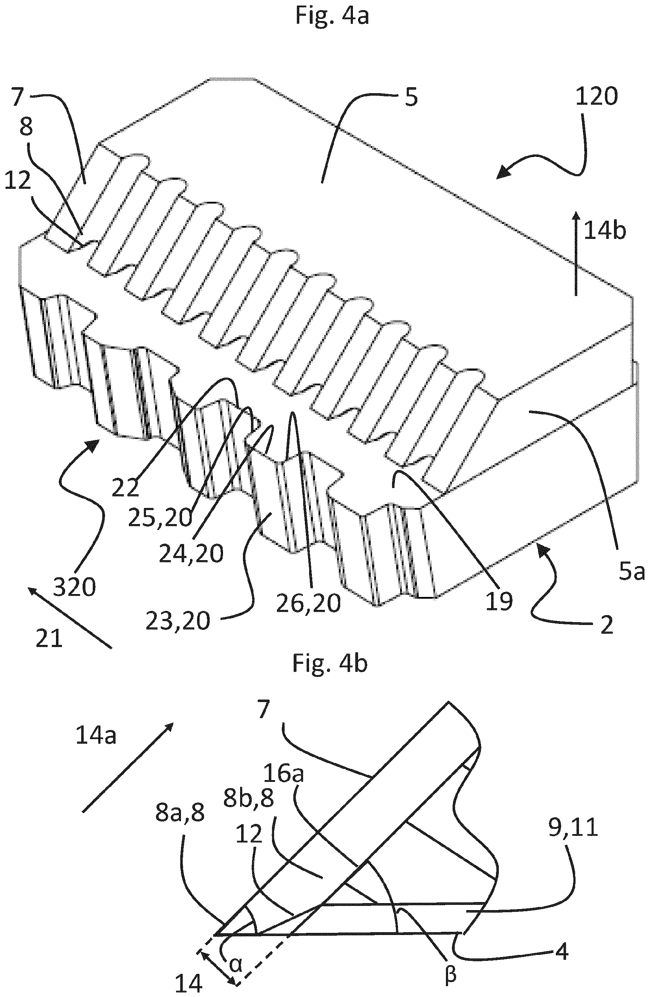

Figs. 4a and 4b show a chip breaker body 120 according to a fourth embodiment and a cutting tool 320 according to a fourth embodiment, Fig. 2a is a perspective depiction similar to Fig. 2a and Fig. 2b a depiction similar to Fig. 2b. To the extent that the features have a similar function and arrangement as in the first embodiment of the chip breaker body 1 and first embodiment of the cutting tool 3 the same reference numerals are used in Figs. 4a and 4b.

The chip breaker body 120 differs from the breaker body 100 only regarding the design of the elongated recesses 8 which are longer, such that the elongated recesses intersect the top surface 5. The slanted front surface 7 of the breaker body 110 extends under the same angle α = 45° as for the chip breaker body 1 but the elongated recess 8 extends under a smaller bevel-like angle β = 45°, i.e. β = α, such that β - α = 0°, which lies in the range from 90° to -45°.

The depth-to-width ratio of the elongated recesses 8 of the breaker body 120 is the same as for the elongated recesses 8 of the chip breaker body 1. The direction 14a depicted in Fig. 4b is obliquely oriented with respect the surface normal vector 14b of the top surface 5 depicted in Fig. 4a.

The cutting tool 320 differs from the cutting tool 1 only regarding the chip breaker body 120, i.e. the cutting insert 2 is the same.

### Fifth Embodiment

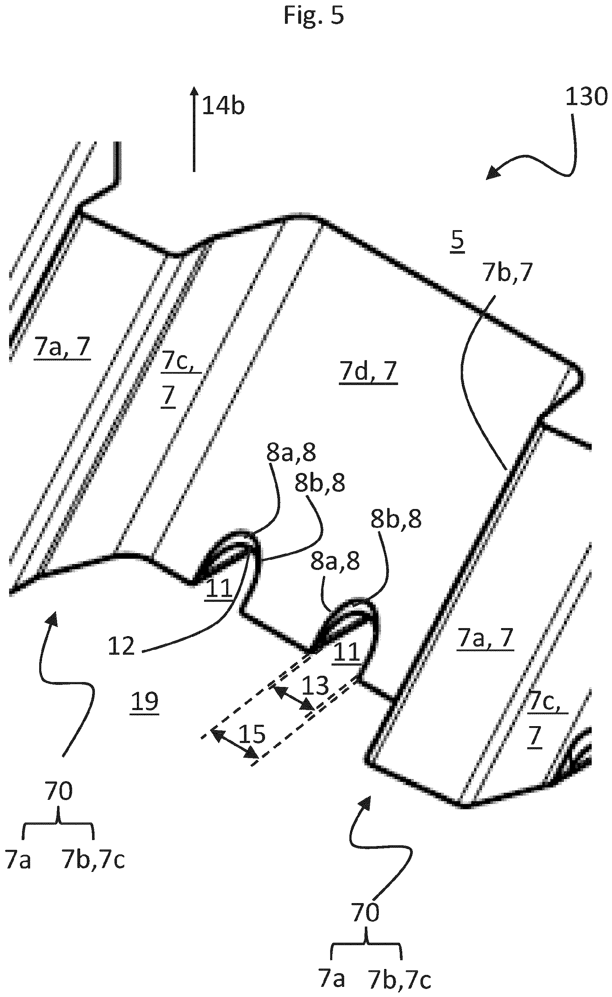

Fig. 5 shows in a perspective depiction a section of a chip breaker body 130 according to a fifth embodiment. The chip breaker body 130 differs from each of the chip breaker bodies 1, 100, 110 and 120 in that the slanted front surface 7 comprises rail-like ridges 70 formed in each instance by a front ridge surface 7a arranged to follow the top cutting edge 24 of the cutting insert 2, a leading ridge surface 7b arranged to follow the leading cutting edge 25 of the cutting insert 2 and a trailing ridge surface 7c arranged to follow the trailing cutting edge 26 of the cutting insert 2. The effect of the rail-like ridges 70 is to bring a surface part of the slanted front surface 7 in terms of the front ridge surface 7a closer to the top cutting edge 25 to assist there in chip formation. The rail-like ridges 70 are separated from each other by a base surface section 7d of the slanted front surface 7; the base surface section 7d defines the root of the rail-like ridges 70. Fig. 5 makes it apparent, that the elongated recesses 8, two of which being formed exemplarily within the base surface section 7d, i.e. in the root, depress the front surfaces 7 individually and independently of a recess which might be constructed from a directly connected surface triplet formed by one of the trailing ridge surfaces 7c, the base surface section 7d and one of the leading ridge surfaces 7b, wherein the front ridge surface 7a defines the crest of the rail-like ridge 70.

Fig. 5 shows exemplarily that the width 13 of each elongated recess 8 is not more than 1.5 times as large as a bottommost width 15 of the front groove opening edge 12, exemplarily 1.1 as large. The elongated recesses 8 could alternatively be formed in the front ridge surfaces 7a, i.e. at the crest of the rail-like ridges. Further, one of the elongated recesses 8 could be maintained in the base surface section 7d, i.e. in the root, and the other elongated recesses 8 could be formed in the front ridge surface-surface 7a, i.e. in the crest. The chip breaker body 130 can apparently be combined with the cutting insert 2 by placing the chip breaker body 130 on top of the cutting insert 2 as depicted in e.g. Fig. 1 thereby forming a further embodiment of a cutting tool.

Figs. 1a, 1b, 2a, 2b, 3a, 3b, 4a, 4b and 5 show different embodiments of a chip breaker body 1, 100, 110, 120 and 130 each comprising a slanted front surface 7 for chip formation and to be placed as an individual part on top of a cutting insert 2, i.e. on top of its rake surface 19. The cutting insert 2 is exemplarily made from a sintered cemented carbide in each of these embodiments. The sintered cemented carbide the cutting insert 2 is exemplarily made of is different from the sintered cemented carbide the chip breaker bodies 1, 100, 110, 120 and 130 are exemplarily made of to meet the different mechanical and thermal conditions present at the cutting insert 2 and the chip breaker bodies 1, 100, 110, 120 and 130 during machining.

The slanted front surfaces 7 comprise each at least one elongated recess 8 which contains completely a front groove opening edge 12 such that the elongated recesses 8 serve as a bevel breaking an otherwise sharper transition between the groove opening edge 12, through which coolant shall exit through the channel-like grooves 11 of the groove structure 9. The chip breaker body 130 exemplified that the elongated recesses 8 depress the slanted front surfaces 7 independently of rail-like ridges 70 at base surface sections 7d of the slanted front surfaces 7 arranged between the rail-like ridges 70. It is expressively stated that the slanted front surfaces 7 may in each embodiment also have a different shape, e.g. a stepped shape by which it retreats stepwise closer to the back surface 6 following the direction opposite to the direction of the arrow 21.

The person skilled in the art understands that the disclosed depth-to-width ratios regarding the elongated recesses 8 are merely exemplarily selected, though being preferably in the range from 0.3 to 2 in which this ratio can be selected freely.

The person skilled in the art understands further that the disclosed widths 15, each being a bottommost width of the elongated recesses 8, are preferably not more than 1.5 times as large as the width 13, each being a bottommost width of the front groove opening edges 12, and may be selected within this range freely.

The chip breaker bodies 1, 100, 110, 120 and 130 can be designed differently regarding the number of their elongated recesses 8 and/or also regarding their elongated extension which can also be skewed. The person skilled in the art understands that the arrangement and orientation of the elongated recesses 8 will be selected according to the expected chip flow.

Figs. 1a, 1c, 2a, 3a and 4a show different embodiments of a cutting tool 3, 300, 310 and 320. The thread cutting insert 2, also termed just cutting insert 2 within the present description of the Figures, is exemplarily the same in each of these embodiments but can also designed differently in each and/or every embodiment, i.e. with a different number of cutting teeth 20 and/or different shape and/or size of cutting teeth 20. It is likewise possible that the thread cutting insert 2 is replaced by a cutting insert designed for turning, milling, drilling, grooving or parting.

## Claims

**1.** A chip breaker body (1, 100, 110, 120, 130) for a cutting tool (3, 300, 310, 320) comprising: a bottom surface (4), a top surface (5), a back surface (6) and a slanted front surface (7), wherein the back surface (6) and the slanted front surface (7) are arranged opposite to each other and are each joined to the bottom surface (4) and top surface (5), wherein the slanted front surface (7) has at least one elongated recess (8), wherein the bottom surface (4) has a groove structure (9) intersecting the elongated recess (8), creating a front groove opening edge (12) within the elongated recess (8), wherein, if the slanted front surface (7) forms one or more rail-like ridges (70), the elongated recess (8) depresses the slanted-front surface (7) independently of the presence of one or more such rail-like ridges (70).

**2.** Chip breaker body (1, 100, 110, 120, 130) according to claim 1, wherein the elongated recess has a depth-to-width ratio in the range from 0.3 to 2.

**3.** Chip breaker body (1, 100, 110, 120, 130) according to any one of the preceding claims, wherein a bottommost width (15) of the elongated recess (8) is not more than 1.5 times as large as a bottommost width (13) of the front groove opening edge (12).

**4.** Chip breaker body (1, 100, 110, 130) according to any of the preceding claims, wherein the slanted front surface (7) extends under a slanted front surface angle α with respect to the bottom surface (4) in a cross-section plane arranged within the elongated recess (8) and oriented parallel along its elongated extension, wherein the elongated recess (8) extends under a bevel-like angle β with respect to the bottom surface (4) in said cross-section plane, wherein β - α = γ, wherein γ ranges from 90 ° to -α.

**5.** Chip breaker body (1, 100, 110, 130) according to claim 4, wherein γ ranges from 60° to 0°.

**6.** Chip breaker body (1, 100, 110, 130) according to claim 4 or 5, wherein α ranges from 25° to 75°.

**7.** Chip breaker body (1, 100, 110, 130) according to claim 6, wherein α ranges from 35° to 60°.

**8.** Chip breaker body (1, 100, 110, 130) according to any of the preceding claims, wherein the elongated recess (8) does not intersect the top surface (5).

**8.** Chip breaker body (1, 100, 110, 120, 130) according to any of the preceding claims, wherein the width (15) of the elongated recess decreases along the elongated extension of the elongated recess (8) in the direction away from the front groove opening edge (12).

**9.** Chip breaker body (1, 100, 110, 120, 130) according to any of the preceding claims, wherein the chip breaker body is made from a sintered cemented carbide.

**10.** Chip breaker body according (1, 100, 110, 120, 130) to any of the preceding claims, wherein the slanted front surface (7) is completely planar outside of the elongated recess (8) and outside of possible further elongated recesses (8) having the features according to at least one the preceding claims.

**11.** Chip breaker body (1, 100, 110, 120, 130) according to any of the preceding claims, wherein the top surface (5) is completely planar.

**12.** Cutting tool (3, 300, 310, 320) comprising a chip breaker body (1, 100, 110, 120, 130) according to any of the preceding claims and a cutting insert (2), wherein the chip breaker body (1, 100, 110, 120, 130) is positioned onto the cutting insert (2) on parts of a rake surface (19) of the cutting insert (2) for chip guiding along the slanted front surface (7).

**13.** Cutting tool (3, 300, 310, 320) according to claim 12, wherein the cutting insert (2) comprises at least one thread cutting tooth (20).
